# EUROPÄISCHE PATENTSCHRIFT

(11) **EP 1 593 870 B1**
(45) Veröffentlichungstag und Bekanntmachung des Hinweises auf die Patenterteilung: **16.01.2008**
(21) Anmeldenummer: 05008959.8
(22) Anmeldetag: 23.04.2005
(51) Int. Cl.: F16D 48/06

(54) **Verfahren zum Erkennen eines Fehlers einer Betätigungseinrichtung**
Method of detecting an error in an actuating device
Procédé de détection d'une erreur dans un dispositif d'actionnement

(30) Priorität: 05.05.2004 DE 102004022166
(43) Veröffentlichungstag der Anmeldung: 09.11.2005
(73) Patentinhaber: LuK Lamellen und Kupplungsbau Beteiligungs KG, 77815 Bühl (DE)
(72) Erfinder: Enderlin, Ralf, 77815 Bühl-Neusatz (DE); Moosheimer, Johannes, Dr., 77815 Bühl (DE)

(56) Entgegenhaltungen:
- WO-A-20/04005743
- DE-A1- 4 426 260
- DE-A1- 10 137 597
- DE-A1- 10 316 419

## Beschreibung

Die vorliegende Erfindung betrifft ein Verfahren zum Erkennen eines Fehlers einer Betätigungseinrichtung, beispielsweise einer Leckage bei einer hydraulischen Strecke zum Betätigen zumindest einer Kupplung eines automatisierten Getriebes, wobei zum Betätigen zumindest ein mit der hydraulischen Strecke gekoppelter Aktor verwendet wird. Ferner betrifft die vorliegende Erfindung eine Betätigungseinrichtung zum Betätigen zumindest einer automatisierten Kupplung eines Kraftfahrzeuges, beispielsweise umfassend eine hydraulische Strecke mit zumindest einem Aktor zum Betätigen eines Geberzylinders. Die hydraulische Betätigungseinrichtung ist insbesondere zum Durchführen des vorgenannten Verfahrens vorgesehen.

Aus der Fahrzeugtechnik sind Verfahren zum Erkennen von Fehlern einer Betätigungseinrichtung für Kupplungen, insbesondere einer Leckage bei einer hydraulischen Betätigungs-Strecke bekannt. Jedoch sind die bekannten Verfahren relativ aufwändig bezüglich einer Überwachung der hydraulischen Übertragungsstrecke bei einer automatisierten Kupplung. So wird beispielsweise in der DE 103 16 419 A1 ein hydraulisches Ausrücksystem einer Doppelkupplung eines Parallelschaltgetriebes offenbart, wobei das Ausrücksystem den beiden zugeordnete, jeweilige hydraulisch betätigte Geberzylinder und Nehmerzylinder aufweist, und der Betrag der Änderung der Ausrückposition des Nehmerzylinders der nicht aktiven Kupplung und/oder der Betrag der Änderungen der Übertragungsfunktionen beider Kupplungen ermittelt wird und die Lackage festgestellt wird, wenn mindestens einer der Beträge einen vorbestimmten Wert überschreitet.

Der vorliegenden Erfindung liegt die Aufgabe zugrunde, ein Verfahren zum Erkennen eines Fehlers einer Betätigungseinrichtung wie beispielsweise einer Leckage bei einer hydraulischen Übertragungsstrecke und eine hydraulische Betätigungseinrichtung für eine Kupplung der eingangs genannten Gattungen vorzuschlagen, welche insbesondere ein Erkennen einer Leckage oder eine Blockade der Betätigungseinrichtung auf einfachste Weise ermöglichen, ohne dass aufwändige Maßnahmen an dem Getriebe notwendig sind. Die erfinderische Lösung soll für hydraulische und mechanische Betätigungseinrichtungen anwendbar sein und für alle Typen von Getrieben mit einer automatisierten Kupplung wie beispielsweise manuell geschaltete Getriebe mit automatisierter Kupplung (EKM = elektronisches Kupplungsmanagement) oder hilfskraftbetätigter Kupplung (clutch-by-wire), automatisierte Schaltgetriebe (ASG), Doppelkupplungsgetriebe (DKG, PSG = parallel shaft gear) oder stufenlos verstellbare Getriebe (CVT = continuous variable transmission).

Diese Aufgabe wird erfindungsgemäß durch ein Verfahren zum Erkennen eines Fehlers einer Betätigungseinrichtung für eine automatisierte Kupplung, wie beispielsweise einer Leckage bei einer hydraulischen Strecke zum Betätigen zumindest einer Kupplung der automatisierten Kupplung gelöst, wobei zum Betätigen zumindest ein mit der Übertragungsstrecke gekoppelter Aktor verwendet wird, und wobei eine maximal von der Betätigungseinrichtung verfahrbare Wegstrecke gespeichert wird und mit der im Betrieb gemessenen Wegstrecke verglichen wird, um einen Fehler zu ermitteln.

Gemäß der vorliegenden Erfindung ist vorgesehen dass bei Überschreiten der maximal verfahrbaren Wegstrecke, welche z.B. in der Kupplungssteuerung bzw. in dem Kupplungssteuergerät hinterlegt ist, eine Leckage detektiert wird, wenn der zeitliche Abstand der letzten Aktivierung einer Schnüffelfunktion einen vorbestimmten Wert nicht überschritten hat.

Dazu ist es lediglich erforderlich, dass die Kupplung mittels der hydraulischen Übertragungstrecke geschlossen und geöffnet wird. Bei Unterschreiten der Wegstrecke wird erkannt, dass die Betätigungseinrichtung blockiert ist.

Ein besonders vorteilhafter Aspekt der vorliegenden Erfindung kann vorsehen, dass bei dem vorgeschlagenen Verfahren die maximal verfahrbare Wegstrecke vorzugsweise bei der Erstinbetriebnahme des Getriebes gemessen und in einem Kupplungssteuergerät oder dergleichen abgespeichert wird. Auf diese Weise kann die als zulässig definierte Wegstrecke ohne weiteres zum Vergleich mit einer aktuell gemessenen Wegstrecke verglichen und ausgewertet werden, um sofort einen möglichen Fehler feststellen zu können.

Die gemessene Wegstrecke kann durch zwei Anschläge im Ausrücksystem begrenzt werden. Die Anschläge können an verschiedenen Bauteilkomponenten des Ausrücksystems vorgesehen sein, beispielsweise kann ein Endzustand der Wegstrecke verwendet werden, bei dem ein Kolben eines Geberzylinders in der hydraulischen Übertragungsstrecke derart zurückgefahren ist, dass eine Schnüffelbohrung freigegeben ist und das Ausrücksystem drucklos ist. Eine so genannte aufgedrückte Kupplung, die als selbstnachstellende Kupplung (SAC) ausgeführt sein kann, ist in dieser Situation geschlossen. Ein weiterer Anschlag kann durch einen Zustand definiert werden, bei dem der Kolben des Geberzylinders ausgefahren ist und die Schnüffelbohrung verschlossen ist. In diesem Zustand ist das Ausrücksystem druckbehaftet, wobei eine aufgedrückte Kupplung in diesem Fall geöffnet ist.

Der erstgenannte Anschlag ist in der Regel ein so genannter harter Anschlag und ein bestimmtes charakteristisches Merkmal für den Aktor, welches unabhängig von der Temperatur oder eventuellen Anfahrkräften unverändert bleibt. Der weitere definierte Anschlag kann dagegen je nach Systemauslegung ein so genannter harter oder weicher Anschlag sein. Ein harter Anschlag unterscheidet sich von einem weichen Anschlag hinsichtlich seiner Empfindlichkeit gegenüber Temperatur- und Aktorkraftänderungen. Der harte Anschlag wird definiert, indem die Wegstrecke direkt durch den Kupplungsaktor begrenzt wird. Bei dem weichen Anschlag wird die Wegstrecke durch eine Blockade der hydraulischen Übertragungsstrecke durch einen Anschlag in der Kupplung selbst oder in einem Bauteil nahe der Kupplung, beispielsweise bei einem hydraulischen System im Nehmerzylinder, begrenzt, um die Überprüfung der Wegstrecke in einem möglichst weiten Bereich der Funktionsstrecke der Betätigungseinrichtung einsetzen zu können, da eine Überwachung auf den genannten Fehler nur zwischen den beiden Grenzen der Wegstrecke möglich ist.

Besonders vorteilhaft ist es, wenn als erster Anschlag ein harter Anschlag gewählt wird, bei dem die Kupplung geschlossen ist und der Kolben im Geberzylinder zurückgefahren ist. Als zweiter Anschlag kann ein weicher Anschlag gewählt werden, bei dem die Wegstrecke durch einen Anschlag in der Kupplung selbst begrenzt wird. Es sind jedoch auch andere Anschläge zum Erkennen von Leckagen bzw. zum Begrenzen der gemessenen Wegstrecke denkbar.

Als Folge einer erkannten Leckage im Falle eines hydraulischen Ausrücksystems kann das Anlassen der Brennkraftmaschine verhindert werden, da unter Umständen ein Gang eingelegt sein könnte und sich das Fahrzeug in unerwünschter Weise fortbewegen könnte. Dabei kann es zweckmäßig sein, vor jedem Start der Brennkraftmaschine eine entsprechende Überprüfung auszuführen und gegebenenfalls die Anschläge, insbesondere den Endanschlag im Bereich der Kupplung zu überprüfen. Weiterhin kann bei einem erkannten Fehler z. B. im Falle eines automatisierten Getriebes ein Notlaufprogramm des Getriebes bzw. der Steuerung aktiviert werden, indem beispielsweise ohne Kupplung geschaltet wird. Zudem kann z. B. eine Fehlermeldung an den Fahrer gesendet werden, sodass der Fahrer über die vorhandenen Probleme informiert wird und eventuell eine Werkstatt aufsuchen kann. Vorzugsweise kann das vorgeschlagene Verfahren bei selbstnachstellenden Kupplungen oder auch bei anderen Kupplungssystemen eingesetzt werden.

Die der Erfindung zugrunde liegende Aufgabe kann auch durch eine hydraulische Betätigungseinrichtung nach Anspruch II gelöst werden.

Gemäß eines erfinderischen Gedankens kann es auch möglich sein, eine Blockade der Betätigungseinrichtung in der Weise zu erkennen, dass die gemessene Wegstrecke kleiner als die im Rahmen eines üblichen Kupplungshubs erwartete Wegstrecke. Die erwartete Wegstrecke kann dabei aus der maximalen Wegstrecke abgeleitet werden, indem diese entsprechend vermindert wird, oder unter Berücksichtigung des aktuellen Kupplungsverschleißes aus den aktuellen Werten für den Kupplungshub gewonnen werden, wobei es vorteilhaft sein kann, eine Plausibilisierung des Kupplungswertes in der Weise durchzuführen, dass ein Kupplungshub verwendet wird, der realistisch ist und größer als eine Wegstrecke ist, in der eine Blockade der Betätigungseinrichtung typischerweise auftreten kann.

Nachfolgend wird die vorliegende Erfindung anhand der Zeichnungen näher erläutert.

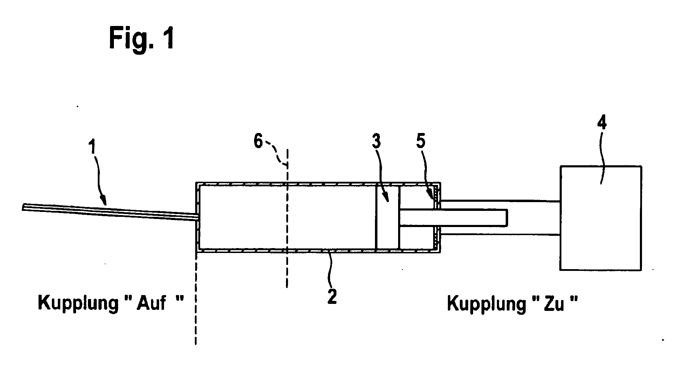

Die einzige Figur der vorliegenden Erfindung zeigt eine schematische Teilansicht einer erfindungsgemäßen hydraulischen Übertragungsstrecke zum Betätigen einer Kupplung eines automatisierten Getriebes. Die Betätigungseinrichtung umfasst eine hydraulische Übertragungsstrecke 1, welche mit einem Geberzylinder 2 verbunden ist, wobei ein Kolben 3 des Geberzylinders 2 von einem Aktor betätigt wird. Der Aktor ist bei dieser Ausführung als Elektromotor 4 ausgebildet. Durch die Betätigung des Kolbens 3 des Geberzylinders 2 kann die Kupplung hydraulisch geöffnet und geschlossen werden.

Die Wegstrecke des Aktors bzw. des Kolbens 3 des Geberzylinders 2 ist in Richtung "Kupplung schließen" durch einen harten Anschlag 5 begrenzt. In Richtung "Kupplung öffnen" wird die Wegstrecke durch einen weichen Anschlag 6 begrenzt. Der weiche Anschlag 6 ist definiert durch einen ausgefahrenen Kolben 3 des Geberzylinders 2, sodass die Schnüffelbohrung verschlossen ist, wobei die Wegstrecke durch die Blockade der hydraulischen Übertragungsstrecke 1 durch den Anschlag in der Kupplung selbst festgelegt ist.

Die durch den harten Anschlag 5 und den weichen Anschlag 6 begrenzte Wegstrecke kann als Maß für die Güte der hydraulischen Übertragungsstrecke 1 verwendet werden, sodass bei einer Überschreitung der zulässigen Wegstrecke, welche z.B. in einem EEPROM-Speicher oder dergleichen eines Kupplungssteuergerätes als Referenzmaß abgelegt ist, eine Leckage bei der hydraulischen Übertragungsstrecke 1 erkannt werden kann.

Bei dem hier gezeigten Ausführungsbeispiel der Betätigungseinrichtung kann die maximal verfahrbare Wegstrecke, welche durch die Kupplung begrenzt ist, etwa 20 mm betragen. Die maximal verfahrbare Wegstrecke im Aktor selbst kann etwa 40 mm betragen. Es sind jedoch auch andere Abmessungen denkbar.

### Bezugszeichenliste

- 1: Hydraulische Übertragungsstrecke
- 2: Geberzylinder
- 3: Kolben
- 4: Elektromotor
- 5: Harter Anschlag
- 6: Weicher Anschlag

## Patentansprüche

1. Verfahren zum Erkennen eines Fehlers in einer Übertragungsstrecke zum Betätigen zumindest einer automatisierten Kupplung, wobei zumindest eine zwischen der Kupplung und einem Aktor wirkverbundene Betätigungseinrichtung entlang der Übertragungsstrecke verwendet wird, wobei eine maximal verfahrbare Wegstrecke zwischen einem Endpunkt im Bereich des Aktors und einem Endbereich im Bereich der Kupplung gespeichert wird und mit der im Betrieb gemessenen Wegstrecke verglichen wird, um den Fehler zu ermitteln, **dadurch gekennzeichnet, dass** bei Überschreiten der maximal verfahrbaren Wegstrecke eine Leckage detektiert wird, wenn der zeitliche Abstand der letzten Aktivierung einer Schnüffelfunktion einen vorbestimmten Grenzwert nicht überschreitet.

2. Verfahren nach Anspruch 1, **dadurch gekennzeichnet, dass** die maximal verfahrbare Wegstrecke bei der Erstinbetriebnahme gemessen und in einem Kupplungssteuergerät abgespeichert wird.

3. Verfahren nach Anspruch 1 oder 2, **dadurch gekennzeichnet, dass** die Endbereiche aus zwei Anschlägen (5, 6) des Betätigungssystems begrenzt wird.

4. Verfahren nach einem der Ansprüche 1 bis 3, **dadurch gekennzeichnet, dass** als Betätigungseinrichtung ein hydraulisches Ausrücksystem mit einem vom Aktor betätigten Geberzylinder und einem mittels einer hydraulischen Leitung mit dem Geberzylinder (2) wirkverbundenen, die Kupplung betätigenden Nehmerzylinder verwendet wird.

5. Verfahren nach Anspruch 4, **dadurch gekennzeichnet, dass** als erster Anschlag ein harter Anschlag (5) gewählt wird, bei dem die Kupplung geschlossen ist und ein im Geberzylinder (2) verlagerbarer Kolben (3) im Geberzylinder (2) zurückgefahren ist.

6. Verfahren nach einem der Ansprüche 3 bis 5, **dadurch gekennzeichnet, dass** als zweiter Anschlag ein weicher Anschlag (6) gewählt wird, bei dem die Wegstrecke durch einen Anschlag in der Kupplung begrenzt wird.

7. Verfahren nach einem der Ansprüche 1 bis 6, **dadurch gekennzeichnet, dass** bei erkanntem Fehler ein Notlaufprogramm aktiviert wird.

8. Verfahren nach einem der Ansprüche 1 bis 7, **dadurch gekennzeichnet, dass** bei erkanntem Fehler eine Fehlermeldung für den Fahrer gesendet wird.

9. Verfahren nach einem der vorhergehenden Ansprüche, **dadurch gekennzeichnet, dass** bei erkanntem Fehler das Anlassen einer Brennkraftmaschine verhindert wird.

10. Verfahren nach einem der vorangehenden Ansprüche zur Verwendung bei einer selbstnachstellenden Kupplung.

11. Hydraulische Betätigungseinrichtung zum Betätigen zumindest einer Kupplung eines automatisierten Getriebes, umfassend eine hydraulische Übertragungsstrecke mit zumindest einem Aktor zum Betätigen eines Geberzylinders, insbesondere zum Durchführen des Verfahren nach einem der vorangehenden Ansprüche, wobei die hydraulische Betätigungseinrichtung eine Schnüffelfunktion aufweist, **dadurch gekennzeichnet, dass** zum Erkennen einer Leckage bei der hydraulischen Übertragungsstrecke (1) Mittel vorhanden sind, mit denen eine maximal verfahrbare Wegstrecke des Aktors mit der im Betrieb gemessenen Wegstrecke vergleichbar ist und der zeitliche Abstand der letzten Aktivierung der Schnüffelfunktion messbar und mit einem vorbestimmten Grenzwert vergleichbar ist.

12. Verfahren zum Erkennen eines Fehlers in einer Übertragungsstrecke zum Betätigen zumindest einer automatisierten Kupplung, wobei zumindest eine zwischen der Kupplung und einem Aktor wirkverbundene Betätigungseinrichtung entlang der Übertragungsstrecke verwendet wird, wobei eine verfahrbare Wegstrecke zwischen einem Endpunkt im Bereich des Aktors und einem Endbereich im Bereich der Kupplung gespeichert wird und mit der im Betrieb gemessenen Wegstrecke verglichen wird, um den Fehler zu ermitteln, **dadurch gekennzeichnet, dass** ein Fehler detektiert wird, wenn die gemessene Wegstrecke kleiner als eine für den Ausrückvorgang der Kupplung notwendige Wegstrecke ist und der zeitliche Abstand der letzten Aktivierung einer Schnüffelfunktion einen vorbestimmten Grenzwert nicht überschreitet.

## Claims

1. Method for detecting an error in a transmission link for actuating at least one automated clutch, where at least one actuating device that is functionally connected between the clutch and an actuator along the transmission link is used, where a maximum traversable travel distance between an end point in the area of the actuator and an end zone in the area of the clutch is stored and is compared to the travel distance measured during operation in order to determine the error, **characterized in that** when the maximum traversable travel distance is exceeded a leakage is detected if the time interval since the last activation of a sniffing function does not exceed a predetermined limit.

2. Method according to Claim 1, **characterized in that** the maximum traversable travel distance is measured when the system is started for the first time and is stored in a clutch controller.

3. Method according to Claim 1 or 2, **characterized in that** the end areas are bounded by two stops (5, 6) of the actuating system.

4. Method according to one of Claims 1 through 3, **characterized in that** a hydraulic system having a master cylinder actuated by the actuator and a slave cylinder that is functionally connected to the master cylinder (2) by means of a hydraulic line and actuates the clutch is used as the actuating system.

5. Method according to Claim 4, **characterized in that** the choice for the first stop is a hard stop (5), at which the clutch is engaged and a piston (3) that is movable in the master cylinder (2) is retracted in the master cylinder (2).

6. Method according to one of Claims 3 through 5, **characterized in that** the choice for the second stop is a soft stop (6), at which the travel is limited by a stop in the clutch.

7. Method according to one of Claims 1 through 6, **characterized in that** an emergency operation program is activated when an error is detected.

8. Method according to one of Claims 1 through 7, **characterized in that** an error message for the driver is sent when an error is detected.

9. Method according to one of the preceding claims, **characterized in that** starting a combustion engine is prevented when an error is detected.

10. Method according to one of the preceding claims for use with a self-adjusting clutch.

11. Hydraulic actuating system for actuating at least one clutch of an automated transmission, comprising a hydraulic transmission link having at least one actuator for actuating a master cylinder, in particular for carrying out the method according to one of the preceding claims, where the hydraulic actuating system has a sniffing function, **characterized in that** means are present to detect leakage in the hydraulic transmission link (1), with which a maximum traversable travel distance of the actuator may be compared to the travel distance measured during operation, and the time interval since the last activation of the sniffing function can be measured and compared to a predefined limiting value.

12. Method for detecting an error in a transmission link for actuating at least one automated clutch, where at least one actuating device that is functionally connected between the clutch and an actuator along the transmission link is used, where a traversable travel distance between an end point in the area of the actuator and an end zone in the area of the clutch is stored and is compared to the travel distance measured during operation in order to determine the error, **characterized in that** an error is detected when the measured travel distance is shorter than a travel distance needed for the release process of the clutch and the time interval since the last activation of a sniffing function does not exceed a predefined limiting value.

## Revendications

1. Procédé de détection d'un défaut sur une section de transmission destinée à actionner au moins un embrayage automatisé, au moins un dispositif d'actionnement connecté activement entre l'embrayage et un acteur étant utilisé le long de la section de transmission, une course de déplacement maximale possible entre une extrémité dans la zone de l'acteur et une zone d'extrémité dans la zone de l'embrayage étant sauvegardée et comparée à la course mesurée pendant le fonctionnement pour déterminer le défaut, **caractérisé en ce que** lors du dépassement de la course de déplacement maximale possible, une fuite est détectée lorsque l'intervalle de temps de la dernière activation d'une fonction de reniflement ne dépasse pas une valeur limite préalablement déterminée.

2. Procédé selon la revendication 1, **caractérisé en ce que** la course de déplacement maximale possible est mesurée lors de la première mise en service et sauvegardée dans un appareil de commande d'embrayage.

3. Procédé selon la revendication 1 ou 2, **caractérisé en ce que** les zones d'extrémités sont limitées par deux butées (5, 6) du système d'actionnement.

4. Procédé selon l'une quelconque des revendications 1 à 3, **caractérisé en ce qu'**un système de débrayage hydraulique avec un cylindre capteur actionné par l'acteur et un cylindre récepteur connecté activement au cylindre capteur (2), qui actionne l'embrayage, au moyen d'une conduite hydraulique sont utilisés comme dispositif d'actionnement.

5. Procédé selon la revendication 4, **caractérisé en ce qu'**une butée dure (5) sur laquelle l'embrayage est fermé et un piston (3) déplaçable dans le cylindre capteur (2) est rentré dans le cylindre capteur (2) est choisie comme première butée.

6. Procédé selon l'une quelconque des revendications 3 à 5, **caractérisé en ce qu'**une butée souple (6) sur laquelle la course est limitée par une butée située dans l'embrayage est choisie comme deuxième butée.

7. Procédé selon l'une quelconque des revendications 1 à 6, **caractérisé en ce qu'**un programme de fonctionnement d'urgence est activé lorsqu'un défaut est détecté.

8. Procédé selon l'une quelconque des revendications 1 à 7, **caractérisé en ce qu'**un message de défaut destiné au conducteur est émis lorsqu'un défaut est détecté.

9. Procédé selon l'une quelconque des revendications précédentes, **caractérisé en ce que** le démarrage d'un moteur à combustion interne est empêché lorsqu'un défaut est détecté.

10. Procédé selon l'une quelconque des revendications précédentes à utiliser sur un embrayage autoréglable.

11. Dispositif d'actionnement hydraulique pour actionner au moins un embrayage d'un engrenage automatisé, comprenant une section de transmission hydraulique avec au moins un acteur pour actionner un cylindre capteur, en particulier pour réaliser le procédé selon une des revendications précédentes, le dispositif d'actionnement hydraulique comportant une fonction de reniflement, **caractérisé en ce que** pour détecter une fuite de la section de transmission hydraulique (1), il y a des moyens qui permettent de comparer une course de déplacement maximale possible de l'acteur à la course mesurée pendant le fonctionnement et de mesurer l'intervalle de temps de la dernière activation de la fonction de reniflement, puis de le comparer à une valeur limite préalablement déterminée.

12. Procédé pour détecter un défaut dans une section de transmission pour l'actionnement d'au moins un embrayage automatisé, au moins un dispositif d'actionnement connecté activement entre l'embrayage et un acteur étant utilisé le long de la section de transmission, une course de déplacement possible entre une extrémité dans la zone de l'acteur et une zone d'extrémité dans la zone de l'embrayage étant sauvegardée et comparée à la course mesurée pendant le fonctionnement pour déterminer le défaut,
**caractérisé en ce qu'**un défaut est détecté lorsque la course mesurée est inférieure à une course nécessaire pour la procédure de débrayage de l'embrayage et lorsque l'intervalle de temps de la dernière activation d'une fonction de reniflement ne dépasse pas une valeur limite préalablement déterminée.
